(19) Europäisches Patentamt
European Patent Office
Office européen des brevets

(11) EP 3 187 840 A1

(12) EUROPEAN PATENT APPLICATION

(43) Date of publication:
05.07.2017 Bulletin 2017/27

(51) Int Cl.:
G01G 23/01 (2006.01)    G01G 23/06 (2006.01)

(21) Application number: 15460147.0

(22) Date of filing: 31.12.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Radwag Wagi Elektroniczne Witold
Lewandowski
26-600 Radom (PL)

(72) Inventors:
• Bazydlo, Piotr
07-410 Ostroleka (PL)
• Kaminski, Marcin
05-083 Zaborów (PL)

(74) Representative: Lampart, Jerzy
Kancelaria Patentowa
Ul. Wyzwolenia 1b
42-624 Ossy (PL)

(54) METHOD OF COMPENSATION FOR VIBRATIONS IMPACT, EXERTED ON MASS MEASUREMENT CARRIED OUT WITH USE OF A DYNAMIC SCALE, WITH APPLICATION OF AN EMPIRICAL MATHEMATICAL MODEL

(57)    A method of compensation for vibrations impact, exerted on mass measurement carried out with use of a dynamic scale, with application of an empirical mathematical model taking form of a neural network or the Takagi-Sugeno fuzzy model, characterized in that inputs for a software-developed procedure implementing the model are: a signal of external vibrations measured with use of at least one external accelerometer for at least one axis of 3-axis coordinate system, and an earlier recorded measurement signal of the dynamic scale, and that an output result is generated in the course of a measurement procedure and that it is a measurement signal noise waveform providing a visual image of external vibrations, which measurement signal noise waveform is intended to be subtracted from the measurement signal, and wherein a compensation is carried out as an operation of subtraction from the measurement signal.

FIG. 4

## Description

The present invention discloses a method of compensation for external vibrations and vibrations sourcing from mobile components of a dynamic scale, which both types of vibrations are exerted on mass measurement signal provided by the scale.

Scales for weighing products in motion on a line are applied in various branches of industry. Option of mass measurement carried out in motion, when there is no need to stop the device, ensures continuity and improved throughput of particular processes. This kind of scales is most frequently used in the food and pharmaceutical industries and on a mechanical components production lines. Since scales operating in an industrial environment are exposed to various ambient conditions influencing values of scales' metrological parameters, it is necessary to provide reliable methods reducing the influence. Vibration of ambient conditions origin (ground vibrations) or vibrations sourcing form the scales itself (belt conveyors in operation) are the most critical factor exerting an impact on the measurement signal of a dynamic scale.

Typical dynamic weighing system comprises few basic components: supporting structure, weighing module producing the measurement signal and supplementary devices such as computer controlling measurement process, supplementary belt conveyors, motors, transmission gears, rollers. Such complex design is a cause of considerable variation of scale produced and transferred vibrations, which vibrations exert an impact on the measurement signal. The most commonly known and used solution for dampening the vibrations are isolators (passive dampening of vibrations) causing dissipation of energy and thus reducing amplitude of vibrations transferred to the weighing system. Another option for vibrations dampening are active damping systems. Such systems measure vibrations by means of an accelerometer, which accelerometer generates signals, with reference to which signals operation of particular actuators is controlled in a way providing that actuator-generated dynamic interaction is in opposite phase to interference sourcing from measured vibrations.

The above methods aim to limit amount of external vibrations reaching the measuring system of a device. Another commonly used solution designed to limit vibrations impact on measurement signal, usually applied in combination with one of the previously described solutions, is method of analog or digital signal processing. Most of the solutions are based on use of particular combination of low-pass filters and high-pass filters. Used low-pass filters are considered to be good owing to the fact that they eliminate influence of higher frequency vibrations, however this solution cannot be used for all applications since the filter parameters, especially the filtering threshold, frequency of which is strictly associated with time interval required for passage of weighed object through the conveyor, is not high enough.

With respect to the above, search for methods providing better compensation is conducted, which compensation could be obtained using external data sources. When it comes to vibrations, a typical solution consists in use of both vibrations sensor (accelerometer) along with an adaptive filter, parameters of which sensor are adapted to sensor-provided information.

One of the methods based on use of adaptive digital filters has been revealed in patent application US 2010/0161268A1. Disclosed solution features at least one additional compensation measurement chain with an accelerometer connected to an analog-digital converter unit and next to an adaptive digital filter. As a result an adaptive filter signal with minus sign is combined with a measurement signal and a sum is obtained. The sum is a measurement signal lacking accelerometer-detected noise.

Document CN103954344A describes one more method using vibrations sensors in order to compensate vibrations impact on measurement signal in real time. The described invention discloses a device and a method of compensation for dynamic scale signal noise in real time. An accelerometer is mounted at a load end of the scale sensor. Scale's sensor signals and accelerometer signals are transferred to a signal processing module in order to be filtered and amplified, next upon being converted to a digital signal they are transferred to a digital signal processor (DSP), by means of which they are processed in order to provide a measurement signal compensated by an accelerometer signal.

The object of the invention is a method of compensation for external vibrations and vibrations sourcing from mobile components of a dynamic scale, which both types of vibrations are exerted on mass measurement signal provided by the scale. Solution being an object of the invention is adopted to dynamic scale operating under any industrial conditions, excluding extreme ones.

The method applies software computational solutions implemented into scale control system, which system operates on the basis of a microprocessor system. Dynamic mathematical model applied for the purposes of compensation for vibrations is either a dynamic non-linear model with neural network or Takagi-Sugeno fuzzy model. An example implementation used in this patent applies commonly known MLP neural network (Multilayer Perceptron).

Inputs of software-developed procedure implementing the said model are: signal of external vibrations measured with use of at least one external accelerometer for at least one axis of 3-axis coordinate system, and earlier recorded measurement signal of a dynamic weighing system.

An output result is generated in the course of measurement procedure and it is the measurement signal noise waveform providing a visual image of external vibrations, which measurement signal noise waveform is intended to be subtracted from the measurement signal, and as for compensation, it is carried out as an operation of subtraction from the signal.

Accelerometers feature an option of measurement of acceleration on at least one axis of 3-axis coordinate system. Calculations unit processing the dynamic weighing system signal (identical to scale control system), being a processor or a processor supported by a signal processor which is a standard scale equipment, is coupled directly with at least one accelerometer, can access and process earlier recorded dynamic scale measurement signal and, by custom, weighing operation measurement signal coming from scale measuring module.

The above described compensation method requires implementation of a learning procedure. The learning procedure use is conditioned by the fact that ambient conditions exert an impact on outputs of software-developed procedure implementing empirical mathematical model. Additionally, result of such learning procedure operation depends on scales design, type of the ground on which the scale is located and on the working environment. This leads to a right conclusion that there is no firm model of vibration impact for each application, which model would be equally efficient for any conditions, and with respect to this the aforementioned learning procedure is a part of the invention too. The learning procedure aims to identify and specify parameters for the model of vibration impact exerted on a dynamic scale measurement signal adopted to particular conditions.

The learning procedure (identification) uses both the scales measurement signal and the signal coming from vibrations sensor, wherein the later one has been recorded in the course of user-performed tests, prior the scale measurement start. Weighing system operating in a typical working environment is subjected to vibrations sourcing from the environment in which it is operated. Software-developed procedure for model identification is repeated periodically or when change of vibrations impact exerted on measurement signal occurs, which change is a result of ambient conditions change (e.g. upon scales relocation).

Upon determining parameters for the model, with use of a learning module, the module can serve as a compensation tool compensating for vibrations impact exerted on measurement signal. The parameters for the model can be entered manually, e.g. upon being determined with use of a different external device. Signal processing module stores its parameters in an internal memory.

At any point of time defined by measurement signal sampling period, the signal processing module calculates current vibrations impact exerted on measurement signal with reference to signals coming from accelerometers and previously recorded data and with use of parameters transferred to software-developed procedure implementing mathematical model. Next the vibrations impact is subtracted from the noise-corrupted measurement signal, which signal has been produced by a weighing module, thus providing compensation.

FIG. 1 shows comparison of a true measurement signal corrupted with noise sourcing from ground vibration and the same measurement signal upon vibrations impact compensation performed with use of a neural dynamic model (Multilayer Perceptron).

FIG. 2 shows comparison between noise-corrupted measurement signal (the same as for FIG. 1) and an output of the neural dynamic model (Multilayer Perceptron)

FIG. 3 shows simplified drawing of a dynamic scale featuring an accelerometer mounted on the supporting structure. 1 - accelerometer, 2 - belt conveyor, 3 - weighing module generating the measurement signal, 4 - control cabinet.

FIG. 4 shows simplified algorithm of the invention operation.

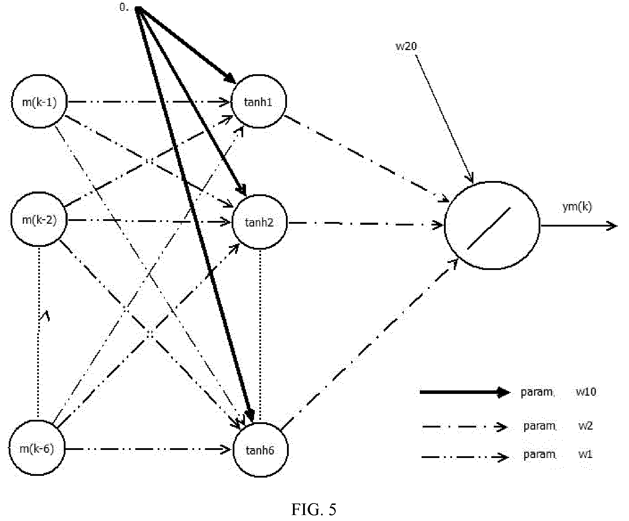

FIG. 5 shows neural network scheme illustrating a below-provided embodiment example.

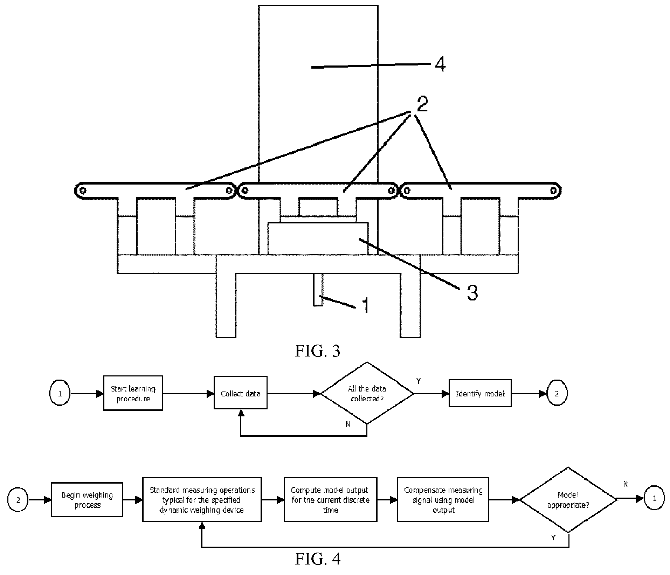

FIG. 3 presents diagram of a typical dynamic scale implementing a method of compensation for vibrations, which method is an object of the invention. The scale features supporting structure, three separately driven belt conveyors, weighing module operation of which is based on electromagnetic compensation of force or on a strain gauge load cell, and which weighing module generates voltage measurement signal, and signal processing module located in a control cabinet, which module displays the weighing result.

Compensation procedure starts with identification of a dynamic mathematical model, which has been marked in FIG. 4 as "Start learning procedure". The scale has to be in its target working environment while the compensation procedure is carried out.

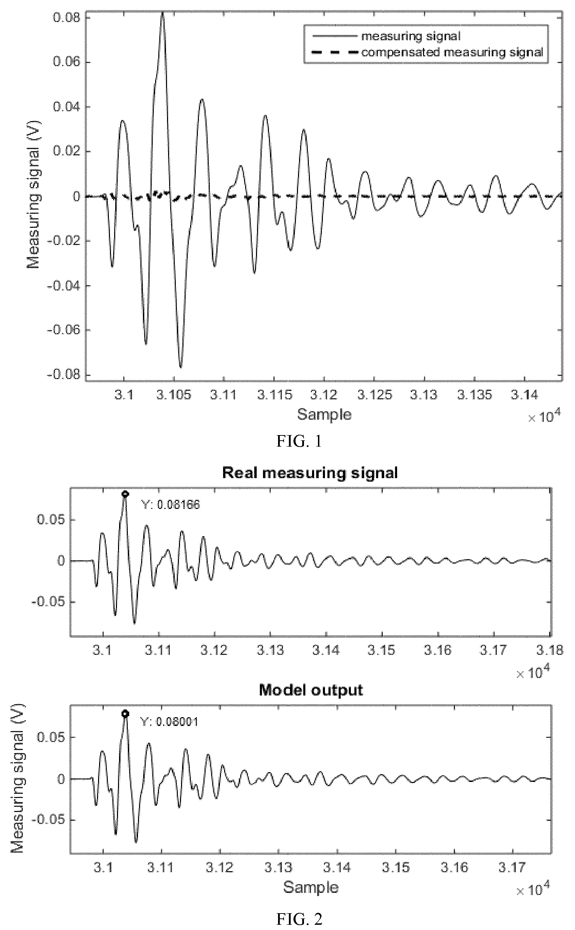

Next data acquisition procedure begins. The procedure aims to obtain measurement signal generated by the dynamic weighing scale and by an external accelerometer or accelerometers. All the signals are obtained synchronously in order to provide precise identification of points of time for measurement signal and for signals to be corrected. The acquisition procedure ends when all the data have been acquired and, as shown in FIG. 4, parameters identification proceeds, wherein the parameters are identified for software-developed procedure implementing model understood as set of actions providing determination of model parameters, which determination is carried out using an algorithm for either local of global optimization. Input data is data acquired from at least one external accelerometer and previously recorded dynamic scale measurement signal. An output result is generated in the course of the measurement procedure and it is the measurement signal noise waveform providing a visual image of external vibrations (vibrations impact exerted on measurement signal), which measurement signal noise waveform is intended to be subtracted from the measurement signal FIG 2. Upon completed identification of output parameters of software-developed procedure characterizing the model it is possible to start measurement procedure.

The presented example of compensation embodiment applies a dynamic model of Multilayer Perception neural network. The solution can also apply linear models but the obtained results for such an instance are less satisfactory owing to nonlinear nature of compensation processes. Input of the compensation procedure is defined as a vector, $q(k) = [m(k-1)\ m(k-2)\ m(k-3)\ m(k-4)\ m(k-5)\ m(k-6)]^T$, where $m(k-1)$ is an accelerometer signal obtained in a discrete time k-1, $m(k-2)$ an accelerometer signal obtained in a discrete time k-2, and analogously for the remaining factors, and where the factors are successive discrete time points of signal record and where T stands for vector transposition. In this particular case, neural model has one layer which consists of 6 hyperbolic tangent neurons and one output layer linear neuron wherein each neuron has its own bias weight. With reference to the above there are 49 parameters to be identified. Model y output for discrete time k is expressed as follows:

$$y_m(k) = w_{20} + w_2 * tanh(w_{10} + w_1 * q(k)),$$

where $w_{20}$ is a model parameter, $w_2$ is vector for 6 model parameters, $w_{10}$ is vector for 6 model parameters and $w_1$ is 6x6 matrix for 36 model parameters. Since the invention refers to every single dynamic mathematical model type, not just the above mentioned one this is for clearer illustration only.

When the measurement signal has been generated, the signal processing module calculates the output for software-developed procedure implementing model $ym(k)$. This operation is illustrated by *FIG. 2* providing comparison of a true noise-corrupted measurement signal with model output.

Next output of the software-developed procedure implementing the model is subtracted from the true noise-corrupted signal. Result of this very operation is illustrated by FIG.1. Compensation is defined as subtraction of earlier identified vibrations impact exerted on dynamic scale operation from the true measurement signal of measurement chain of the scale for each discrete point of time k of the signal waveform.

$$y_c(k) = y_r(k) - y_m(k)$$

where $y_o(k)$ is a compensated signal for the discrete point of time k, $y_r(k)$ is true measurement signal for the discrete point of time *k* and $y_m(k)$ is a model output for the discrete point time *k*.

There are various methods allowing to check whether the model is appropriate, use of them is conditioned by working environment or user's needs/capabilities. One of the methods is to check mean square error of the model and a true measurement signal.

**Claims**

1. A method of compensation for vibrations impact, exerted on mass measurement carried out with use of a dynamic scale, with application of an empirical mathematical model taking form of a neural network or the Takagi-Sugeno fuzzy model, **characterized in that** inputs for a software-developed procedure implementing the model are: a signal of external vibrations measured with use of at least one external accelerometer for at least one axis of 3-axis coordinate system, and an earlier recorded measurement signal of the dynamic scale, and that an output result is generated in the course of a measurement procedure and that it is a measurement signal noise waveform providing a visual image of external vibrations, which measurement signal noise waveform is intended to be subtracted from the measurement signal, and wherein a compensation is carried out as an operation of subtraction from the measurement signal.

2. The method of compensation of claim 1, **characterized in that** parameters for the model are determined manually or by means of a learning procedure.

3. The method of compensation of claim 2, **characterized in that** the learning (identification) procedure requires simultaneous use of the scales measurement signal and the signal coming from vibrations sensor, wherein the later one has been recorded in the course of user-performed tests, prior the scale measurement start.

4. The method of compensation of claim 1, **characterized in that** the compensation procedure is comprised within a measurement signal processing procedure.

5. The method of compensation of claim 4, **characterized in that** the input of the compensation procedure based on the neural network model is advantageously defined as vector q(k), for which number of coordinates depends on quantity of the input signals coming from accelerometers.

6. The method of compensation of claim 4, **characterized in that** the neural network model features one layer which consists of 6 hyperbolic tangent neurons and one linear neuron in an output layer.

7. The method of compensation of claim 1, **character-**

**ized in that** the learning procedure is a set of actions providing identification of parameters of the dynamic empirical mathematical model and that it is implemented into the scale control system operating on the basis of a microprocessors system.

8. The method of compensation of claim 1, **characterized in that** the implemented neural network model advantageously is a Multilayer Perception model.

FIG. 1

**Real measuring signal**

**Model output**

FIG. 2

FIG. 3

| Start learning procedure | → | Collect data | → | All the data collected? | Y → | Identify model | → ② |

FIG. 4

| Begin weighing process | → | Standard measuring operations typical for the specified dynamic weighing device | → | Compute model output for the current discrete time | → | Compensate measuring signal using model output | → | Model appropriate? | N → ① |

FIG. 5

Europäisches
Patentamt

European
Patent Office

Office européen
des brevets

# EUROPEAN SEARCH REPORT

Application Number

EP 15 46 0147

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 013 879 A (NAKAMURA YOSHIHIRO [JP] ET AL) 11 January 2000 (2000-01-11) * abstract; claim 7; figure 1 * * column 2, lines 24-63 * * column 5, lines 38-46 * | 1-8 | INV. G01G23/01 G01G23/06 |
| A | SNYDER S D ET AL: "ACTIVE CONTROL OF VIBRATION USING A NEURAL NETWORK", IEEE TRANSACTIONS ON NEURAL NETWORKS, IEEE SERVICE CENTER, PISCATAWAY, NJ, US, vol. 6, no. 4, 1 July 1995 (1995-07-01), pages 819-828, XP000527401, ISSN: 1045-9227, DOI: 10.1109/72.392246 * the whole document * | 1-8 | |
| A | PARIS MASTOROCOSTAS ET AL: "A generalized Takagi-Sugeno-Kang recurrent fuzzy-neural filter for adaptive noise cancelation", NEURAL COMPUTING AND APPLICATIONS, SPRINGER-VERLAG, LO, vol. 17, no. 5-6, 9 October 2007 (2007-10-09), pages 521-529, XP019659355, ISSN: 1433-3058 * the whole document * | 1-8 | |

TECHNICAL FIELDS
SEARCHED      (IPC)

G01G

The present search report has been drawn up for all claims

| Place of search | Date of completion of the search | Examiner |
|---|---|---|
| The Hague | 31 May 2016 | Pugno, Roberto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 46 0147

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2016

| Patent document cited in search report | | Publication date | Patent family member(s) | | Publication date |
|---|---|---|---|---|---|
| US 6013879 | A | 11-01-2000 | DE | 69408289 D1 | 05-03-1998 |
| | | | DE | 69408289 T2 | 10-06-1998 |
| | | | EP | 0656530 A1 | 07-06-1995 |
| | | | JP | 3539582 B2 | 07-07-2004 |
| | | | JP | H07209066 A | 11-08-1995 |
| | | | US | 6013879 A | 11-01-2000 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100161268 A1
- CN 103954344 A